# EUROPÄISCHE PATENTANMELDUNG

(11) **EP 0 960 928 A2**
(43) Veröffentlichungstag der Anmeldung: **01.12.1999**
(21) Anmeldenummer: 99810070.5
(22) Anmeldetag: 27.01.1999
(51) Int. Cl.: C09K 17/40

(54) **Verfahren zum Erstellen von Erdbauwerken, nach diesem Verfahren hergestelltes Erdbauwerk sowie Gemisch zur Bodenstabilisierung**

(30) Priorität: 29.05.1998 CH 118798
(71) Anmelder: Eberhard Recycling AG, 8302 Kloten (CH)
(72) Erfinder: Bunge, Rainer, 8157 Dielsdorf (CH); Rüegg, Walter, 8405 Winterthur (CH); Hardmeier, Bruno, 8800 Thalwil (CH)
(74) Vertreter: Groner, Manfred

(57) **Zusammenfassung**

Das Verfahren dient zum Erstellen von Erdbauwerken, die im wesentlichen unmittelbar der Einwirkung von Wasser ausgesetzt sind. Kalk oder hydraulische oder latent hydraulische Bindemittel werden in ein zu verfestigendes Material eingebracht. Mit dem Bindemittel oder nachträglich wird Puzzolan in das noch unverfestigte Material in einer Menge eingebracht, die ausreichend ist, um den freien Kalk zumindest weitgehend aufzuzehren und damit die Emission hochalkalischer Lösungen in die Umwelt zu verringern. Das Verfahren reduziert die Gefahr einer Auswaschung von hochalkalischen Lösungen aus einem Erdbauwerk.

## Beschreibung

Die Erfindung betrifft ein Verfahren zum Erstellen von Erdbauwerken, die im wesentlichen unmittelbar der Einwirkung von Wasser ausgesetzt sind, wobei Kalk oder hydraulische oder latent hydraulische Bindemittel in ein zu verfestigendes Material eingebracht werden. Die Erfindung betrifft zudem ein nach diesem Verfahren hergestelltes Erdbauwerk sowie ein Gemisch zur Bodenstabilisierung.

Im Erdbau werden zur Bodenstabilisierung im grossen Umfang Kalk und Zemente benutzt. Diese Materialien werden dem zu behandelnden Material typischerweise in Mengen zwischen 2 % und 10 % zugemischt. Eine Eigenart dieser Zusätze ist, dass in den Porenlösungen des Materials auch langfristig ein hochalkalisches Milieu vorliegt. Durch Kontakt mit Wasser können demzufolge hochalkalische Lösungen in die Umwelt ausgewaschen werden. Das Niederschlagswasser, das von einer frisch erstellten Bodenstabilisierungsschicht abläuft, besitzt typischerweise einen pH-Wert von 12,5. Bei Sickerbeton, also einem porösen Beton, der von Wasser durchsickert wird, kann der pH-Wert des durchsickernden Wassers sogar über 13 liegen. Derartig hochalkalische Wasser dürfen aus verständlichen Gründen in vielen Ländern nicht ohne weiteres in die Umwelt abgegeben werden. Neben der pH-Erhöhung des Grundwassers oder angrenzender Oberflächengewässer besteht vor allem die Gefahr einer Mobilisierung von Schadstoffen, sofern die hochalkalischen Lösungen mit schadstoffkontaminierten Böden in Berührung kommen.

In der Bodenstabilisierungstechnologie werden seit langer Zeit Puzzolane eingesetzt. Das primäre Ziel ist hierbei die Erzeugung von Langzeitfestigkeit infolge der puzzolanischen Rekation mit dem zur Verbesserung der Bodenbearbeitbarkeit ohnehin zugesetzen Kalk. Eine besondere Anwendung ist in der US-A-5,336,022 beschrieben. So werden Puzzolane im besonderen dann zugesetzt, wenn der Boden arm an Tonmineralien mit puzzolanischen Eigenschaften ist. Gelegentlich werden Puzzolane (z.B. Filterstäube) in der Bodenstabilisierung auch als Filler zur Reduktion des Porenvolumens eingesetzt, wobei der angestrebte Effekt jedoch überwiegend physikalischer Natur ist und weniger auf eine Verbesserung der chemischen Eigenschaften abzielt. Hingegen gibt es wenige Ansätze zur gezielten Bereitstellung besonderer chemischer Eigenschaften von Bodenstabilisierungsschichten infolge Puzzolaneinsatz. In Analogie zur Betontechnologie soll in diesem Zusammenhang die Verwendung von Puzzolanen zur Abwehr von bauwerkschädigenden Quell- oder Treiberscheinungen infolge Ettringitbildung dienen, wie in den US-A-5,228,808 vorgeschlagen wird.

Hochalkalische Lösungen können die Umwelt auch aus folgenden Gründen gefährden. Eine direkte Gefährdung besteht beispielsweise für Fische, die hochalkalischen Lösungen ausgesetzt sind. Indirektgefährdungen können durch die Mobilisierung von Schadstoffen bei hohem pH ausgelöst werden. Beispielsweise können amphotere Schwermetalle durch Bildung von löslichen Hydroxydkomplexen und Phenole durch Dissoziation unmittelbar mobilisiert werden. Hohe pH-Werte begünstigen darüberhinaus die Auflösung von bodeneigenen Organika, z.B. Amino-, Carbon- und Huminsäuren, die dann ihrerseits wieder Schwermetalle durch Komplexbildung mobilisieren können. Ähnliche Mechanismen sind auch durch anorganische Komplexbildner nachgewiesen; so wird beispielsweise Kupfer durch den bei hohen pH-Werten aus Ammonium entstehenden Ammoniak mobilisiert.

Der Erfindung liegt die Aufgabe zugrunde, ein Verfahren der genannten Art zu schaffen, das die genannten Probleme wesentlich vermindert, also insbesondere das Problem hochalkalischer Wässer und Abwässer von Erdbauwerken zu vermindern.

Die Aufgabe ist bei einem gattungsgemässen Verfahren dadurch gelöst, dass mit dem Bindemittel oder nachträglich Puzzolan in das noch unverfestigte Material in einer Menge eingebracht wird, die ausreichend ist, um den freien Kalk weitgehend aufzuzehren und damit die Emission hochalkalischer Lösungen in die Umwelt zu verringern. Durch den Zusatz von Puzzolan wird Kalk aufgezehrt. Das im Puzzolan enthaltene reaktive SiO₂ (amorph) bildet bei hohen pH-Werten Kieselsäure, die wiederum mit freiem Kalk zu zementsteinähnlichen Kalziumsilikaten reagiert. Hierdurch wird der pH-Wert der Porenlösungen verringert bzw. das Alkalinitätsdepot abgebaut. Infolgedessen wird die Gefahr einer Auswaschung von hochalkalischen Lösungen reduziert. Unter reaktivem SiO₂ in Puzzolan wird hier diejenige Menge Silziumoxid verstanden, die zur Reaktion mit Kalk unter Normalbedingungen zur Verfügung steht. Der Anteil an reaktivem SiO₂ bestimmt somit das Kalkbindungsvermögen des Puzzolans.

Wesentlich ist somit, dass im erfindungsgemässen Verfahren Puzzolane gezielt eingesetzt werden, um die Umweltgefährdung durch Auslaugen von hochalkalischen Lösungen aus einem Bauwerk heraus zu vermeiden. Puzzolane sind in der Betontechnologie bereits seit dem Altertum bekannt. Sie werden in der Betontechnologie einerseits als Zementersatz eingesetzt, andererseits aber auch bei der Herstellung von Beton mit besonderen Eigenschaften verwendet. Hierzu gehört zum Beispiel die gute Sulfatbeständigkeit, die unter anderem auch durch die Aufzehrung von freiem Kalk durch den beigemischten Puzzolan bewirkt wird. In diesem Zusammenhang wird Puzzolan eingesetzt, um die Zerstörung eines Bauwerks durch Reaktion mit eindringenden betonschädigenden Lösungen zu verhindern. In der einschlägigen Literatur findet sich jedoch kein Hinweis darauf, dass Puzzolane gezielt eingesetzt werden, um die Umweltgefährdung durch Auslaugen von hochalkalischen Lösungen aus einem Bauwerk heraus zu vermeiden. Um ein Korrodieren von Armierungen zu vermeiden, wird allgemein empfohlen, die Puzzolanmenge derart zu beschränken, dass auch langfristig ein Überschuss an freiem Kalk gewährleistet ist.

Beim erfindungsgemässen Verfahren wird im Gegensatz dazu der freie Kalk zumindest weitgehend aufgezehrt, um damit die Emission hochalkalischer Lösungen in die Umwelt zu verringern.

Ein bevorzugtes Gemisch zur Bodenstabilierung besteht im wesentlichen aus Portlandzement und einem Puzzolan. Der Portlandzement trägt hierbei hauptsächlich zur Erzeugung der gewünschten Festigkeit bei. Die im Puzzolan vorhandene Menge an reaktivem SiO₂ bildet mit Kalk zementsteinähnliche Verbindungen. Im Verlauf der hydraulischen Reaktion setzt Zement etwa 20% seines Eigengewichtes an Kalk frei. Bei stöchiometrischem Verlauf der puzzolanischen Reaktion würde diese Menge etwa durch eine gleiche Menge an reaktivem SiO₂ aufgezehrt. Unter der Annahme von 50% im Puzzolan würde der in einem Gemisch von etwa 30% Puzzolan und 70% Zement gebildete Kalk gerade vollständig aufgezehrt werden. Aus den unten diskutierten Gründen empfiehlt es sich in der Praxis jedoch, mit einem deutlichen Puzzolanüberschuss zu arbeiten.

Nachfolgend wird die Erfindung näher erläutert. Die einzige Figur zeigt den pH im Eluat in Abhängigkeit des Anteils Silica Fume. Die Masse % sind hier bezogen auf die Trockensubstanz des fertigen Gemisches.

Erfindungsgemäss werden Puzzolane gezielt zur Abwehr von Umweltgefährdungen durch hochalkalische Wässer, die aus Erdbauwerken auslaugen, eingesetzt. Puzzolane bilden unter hochalkalischen Bedingungen Kieselsäure, die ihrerseits mit freiem Kalk unter Bildung von Kalziumsilikat reagiert, wobei das Verhältnis von Ca:Si etwa bei 1 liegt. Diese Stöchiometrie gilt jedoch nur eingeschränkt. Mit abnehmendem Verhältnis von angebotenem Kalk zu Kieselsäure nimmt auch das Verhältnis Ca:Si in gebildetem Kalziumsilikat ab. Daher ist für eine weitgehende Umsetzung von freiem Kalk ein deutlicher Überschuss an Kieselsäure notwendig. Erst dann ist eine nennenswerte Absenkung des pH-Wertes von eluierenden Porenlösungen zu erwarten. Diese Zusammenhänge werden anhand der im folgenden diskutierten Versuchsreihe deutlich.

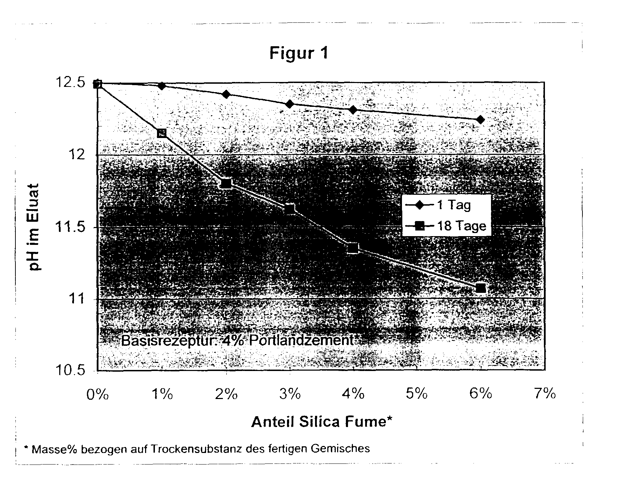

Sieben Glassäulen mit einem Durchmesser von 10 cm und einem permeablen Boden wurden mit jeweils etwa 2,2 kg Erdmaterial gefüllt. In dieses Erdmaterial wurden zuvor 4 % Portlandzement und eine variable Menge Silica Fume sorgfältig eingearbeitet. Der Zement diente bei diesem Versuch als Quelle für freien Kalk, der durch die hydraulische Reaktion im Verlauf des Abbindeprozesses gebildet wird. Silica Fume ist ein sehr wirkungsvoller Puzzolan, der ganz überwiegend aus amorphem Siliziumoxid besteht. Das Erdmaterial wurde in den Glas säulen vorsichtig mit einem Holzstampfer verdichtet. Anschliessend wurden die Säulen mit deionisiertem Wasser geflutet und 15 Stunden lang äquilibriert. Dann wurden die Lösungen abgelassen und der pH-Wert hierbei gemessen. Das bis zum Erreichen der Feldkapazität abgelaufene Wasservolumen betrug je Säule etwa 580 ml. Die Säulen wurden anschliessend luftdicht verschlossen und 18 Tage lang bei Raumtemperatur gehalten. Dann wurden die Säulen erneut geflutet und 15 Stunden lang äquilibriert, abgelassen und in den Lösungen der pH gemessen. Die Ergebnisse sind in der Figur 1 dargestellt. Während der pH bei der ersten Eluierung weitgehend unabhängig von der zugegebenen Menge an Silica Fume war, zeigte sich nach einer Reaktionsdauer von 18 Tagen ein deutlicher Unterschied. Mit zunehmender Menge Silica Fume nimmt der im Eluat gemessene pH ab.

Unter der Annahme, dass im Verlauf der Abbindung von 4 Gewichtsprozent, bezogen auf das Trockengewicht der fertigen Mischung, Zement maximal ein Viertel dieser Menge an Kalk freigesetzt wurde, also 1 %, hätte ein Zusatz von etwa 1 % Silica Fume zum Bodenmaterial bei stöchiometrischer Umsetzung für eine weitgehende "Neutralisation" ausreichen müssen. Wie aus der Figur 1 hervorgeht, war jedoch ein starker Überschuss notwendig, um den pH signifikant zu verringern. Bei einem Zusatz von 6 % Silica Fume wurde der pH der Porenlösung von 12,5 auf 11,1 verringert. Unter Berücksichtigung des Umstandes, dass der pH eine logarithmische Einheit ist, hat sich das Alkalinitätspotential um mehr als eine Grössenordnung verringert. Vermutlich kann das Ergebnis noch verbessert werden, wenn die Reaktionsdauer des Silica Fume mit dem freien Kalk verlängert wird.

Bei der Verwendung einer Mischung von Zement und Puzzolan ist neben der Aufzehrung des gebildeten Feinkalkes noch folgendes zu berücksichtigen. Die puzzolanische Reaktion führt zur Bildung von zementsteinähnlichem Kalziumsilikat und leistet hierdurch einen Beitrag zur erwünschten Festigkeit des Bauwerkes. Bei gleichbleibender Ziel festigkeit des Erdbauwerkes kann durch Zugabe von Puzzolan somit ein Teil des Zementes substituiert werden. Da Zement die Quelle für Feinkalk ist, wird dessen freigesetzte Menge proportional zur substituierten Zementmenge abnehmen.

Die obigen Ausführungen für Gemische von Portlandzement und Silica Fume lassen sich auf Gemische von insbesondere latent hydraulischen Bindemitteln bzw. Kalk mit Puzzolanen verallgemeinern. Hierbei kommen neben Portlandzement und hydraulischem Kalk auch latent hydraulische Bindemittel wie beispielsweise Eisenportlandzement und Hochofenzement in Frage. In die Gruppe der Puzzolane fallen ausser dem genannten Silica Fume insbesondere auch Flugasche, Ziegelmehl, Oelschieferrückstände, Hüttensand, Trass, Kieselgur und Phonolith.

Die Erfindung eignet sich insbesondere für Erdbauwerke, die unmittelbar dem Einfluss der Witterung ausgesetzt sind und die insbesondere keine Deckschicht aufweisen. Ebenfalls geeignet ist die Erfindung bei Erdbauwerken, die von Wasser durchsickert werden und beispielsweise Sickerbeton aufweisen. Ferner kann die Erfindung dort vorteilhaft eingesetzt werden, wo Erdbauwerke aus schadstoffbelasteten Böden bestehen oder mit solchen in Kontakt sind. Auch für die Bodenstabilisierng im Wege- und Wasserbau kann die Erfindung die Umweltgefährdung verringern. Eine besonders vorteilhafte Anwendung gibt es für den Weiherbau.

## Patentansprüche

1. Verfahren zum Erstellen von Erdbauwerken, die im wesentlichen unmittelbar der Einwirkung von Wasser ausgesetzt sind, wobei Kalk oder hydraulische oder latent hydraulische Bindemittel in ein zu verfestigendes Material eingebracht werden, dadurch gekennzeichnet, dass mit dem Bindemittel oder nachträglich Puzzolan in das noch unverfestigte Material in einer Menge eingebracht wird, die ausreichend ist, um den freien Kalk zumindest weitgehend aufzuzehren und damit die Emission hochalkalischer Lösungen in die Umwelt zu verringern.

2. Verfahren nach Anspruch 1, dadurch gekennzeichnet, dass das Verhältnis von freigesetztem Ca(OH)₂ zugegebenem reaktivem SiO₂ kleiner als 1 ist.

3. Verfahren nach Anspruch 1 oder 2, dadurch gekennzeichnet, dass die Menge an Puzzolan bzw. reaktivem SiO₂ so bemessen wird, dass nach etwa 28 Tagen Aushärtung immer noch ein Überschuss an reaktivem SiO₂ gegenüber freiem Kalk vorliegt.

4. Verfahren nach einem der Ansprüche 1 bis 3, dadurch gekennzeichnet, dass das Bindemittel so bemessen wird, dass bezogen auf das fertige Gemisch weniger als 10 %, vorzugsweise weniger als 5 % freier Kalk gebildet wird.

5. Verfahren nach einem der Ansprüche 1 bis 4, dadurch gekennzeichnet, dass das Erdbauwerk eine Schüttung oder eine Bodenstabilisierung ist.

6. Verfahren nach einem der Ansprüche 1 bis 4, dadurch gekennzeichnet, dass das Erdbauwerk Sickerbeton aufweist.

7. Erdbauwerk, hergestellt nach dem Verfahren gemäss Anspruch 1, dadurch gekennzeichnet, dass es Kalk oder hydraulische oder latent hydraulische Bindemittel sowie Puzzolan aufweist.

8. Erdbauwerk nach Anspruch 7, dadurch gekennzeichnet, dass es weitgehend keine Deckschicht aufweist und unmittelbar dem Einfluss der Witterung ausgesetzt ist.

9. Erdbauwerk nach Anspruch 7 oder 8, dadurch gekennzeichnet, dass von diesem Niederschlagswasser in Gewässer, ins Grundwasser oder in schadstoffbelastete Böden abfliessen können.

10. Erdbauwerk nach einem der Ansprüche 7 bis 9, dadurch gekennzeichnet, dass das Puzzolan wenigstens teilweise durch Silica Fume gebildet wird.

11. Erdbauwerk nach einem der Ansprüche 7 bis 9, dadurch gekennzeichnet, dass das Puzzolan wenigstens teilweise durch Flugasche, Ziegelmehl, Oelschieferrückstände, Hüttensand, Trass, Kieselsäure oder Phonolith gebildet ist.

12. Erdbauwerk nach Anspruch 7, dadurch gekennzeichnet, dass es ein Boden für ein Gewässer, insbesondere Weiher ist.

13. Gemisch als Zuschlag zur Bodenstabilisierung nach einem der Ansprüche 7 bis 12, dadurch gekennzeichnet, dass es im wesentlichen aus Portlandzement oder Hochofenzement und Puzzolan besteht.

14. Gemisch nach Anspruch 11, dadurch gekennzeichnet, dass der Gewichtsanteil des Puzzolans grösser ist als derjenige des Zements.

15. Gemisch nach Anspruch 13 oder 14, dadurch gekennzeichnet, dass das Verhältnis von freigesetztem Ca(OH)₂ zu zugegebenenem reaktivem SiO₂ kleiner als 1 ist.
